# EUROPEAN PATENT SPECIFICATION

(11) **EP 3 703 410 B1**
(45) Date of publication and mention of the grant of the patent: **04.10.2023**
(21) Application number: 17932651.7
(22) Date of filing: 27.11.2017
(51) Int. Cl.: H04B 7/02, H04W 24/00, H04W 24/08, H04W 88/02

(54) **INTER-FREQUENCY CELL MEASUREMENT METHOD AND TERMINAL DEVICE**
VERFAHREN ZUR MESSUNG VON ZWISCHENFREQUENZ-ZELLEN UND ENDGERÄTVORRICHTUNG
PROCÉDÉ DE MESURE DE CELLULE INTER-FRÉQUENCE ET DISPOSITIF TERMINAL

(43) Date of publication of application: 02.09.2020
(73) Proprietor: Huawei Technologies Co., Ltd., Longgang District Shenzhen, Guangdong 518129 (CN)
(72) Inventor: ZHENG, Delai, Shenzhen Guangdong 518129 (CN)
(74) Representative: Thun, Clemens
(86) International application number: PCT/CN2017/113158
(87) International publication number: WO 2019/100396

(56) References cited:
- WO-A1-2016/077082
- WO-A1-2016/169056
- WO-A1-2017/039954
- CN-A- 101 662 817
- US-A1- 2006 286 945
- US-A1- 2006 286 945
- US-A1- 2016 353 516
- US-A1- 2016 366 627

## Description

### TECHNICAL FIELD

Embodiments of this application relate to communications technologies, and in particular, to an inter-frequency cell measurement method and terminal device.

### BACKGROUND

In a long term evolution (Long Term Evolution, LTE) communications system, a terminal device in a connected mode may report an A2 event to a network device when signal quality of a serving cell is lower than a preset threshold. After receiving the A2 event sent by the terminal device, the network device may send measurement configuration information to the terminal device, to instruct the terminal device to measure an inter-frequency cell. The inter-frequency cell mentioned herein includes: a neighboring cell (neighboring cell for short) that belongs to a same communications system but does not use a same frequency as the serving cell, a neighboring cell that does not belong to a same communications system as the serving cell, or a neighboring cell not with same center frequency bandwidth as the serving cell.
US 2016/0366627A1 refers to a user equipment (UE) performing combined gap and gap-less measurement procedures. In one instance, the UE performs inter-radio access technology (IRAT) measurement of a neighbor frequency of a second radio access technology (RAT) during a measurement gap allocated by a base station of a first RAT in response to a trigger for inter-RAT handover from the first RAT to the second RAT. The UE also performs downlink timing detection of the neighbor frequency of the second RAT with a second receive chain based on the IRAT measurement.
US 2006/0286945 A1 refers to a method and an apparatus for a Wireless Transmit/receive Unit (WTRU) performing inter-frequency measurements and inter-frequency soft handover from an originating Base Station (BS) operating at a first frequency to a destination BS operating at a second frequency. The WTRU has at least two antennas, where each antenna initially receiving at the first frequency. The method of the invention performs inter-frequency measurements of the channel on the second frequency using at least one of the antennas that were used for performing data reception on the first frequency.
WO 2017/039954 A1 refers to a multi-antenna device configured for addressing connection performance issues in UL/DL imbalance scenarios is described. The device may identify a potential UL/DL imbalance scenario and select signal measurements associated with either a primary antenna or a diversity antenna for mobility procedures and/or mobility measurement reporting based on the detected imbalance. In one example, the device may receive a signal at both the primary and a diversity antenna and may identify an imbalance between the primary and diversity signal measurements. The device may then compare the identified imbalance with an imbalance threshold and may select the primary or diversity signal measurement for mobility procedures and/or measurement reporting based at least in part on the comparison. For instance, if the imbalance is greater than the imbalance threshold the device may use the primary signal measurements and may otherwise use the stronger of the primary or diversity signal measurements.

In the prior art, when a terminal device equipped with a main antenna and a diversity antenna measures an inter-frequency cell based on measurement configuration information, the terminal device needs to switch the main antenna and the diversity antenna from a frequency of a serving cell to a frequency of the inter-frequency cell. That is, in a process of measuring the inter-frequency cell by the terminal device by using the main antenna and the diversity antenna, no antenna of the terminal device stays at the frequency of the serving cell. As a result, the terminal device cannot perform data transmission with the serving cell, resulting in relatively low data transmission efficiency.

### SUMMARY

This application provides an inter-frequency cell measurement method and terminal device to improve efficiency of data transmission between a terminal device and a serving cell in a process of measuring an inter-frequency cell by the terminal device. This problem is solved by the subject matter of the independent claims. Further implementation forms are provided in the dependent claims. In the following, the aspects and related implementations refer to the invention, while the examples are provided for illustrative purposes.

According to a first aspect, an inter-frequency cell measurement method is provided, where a terminal device includes two antennas, one as a main antenna and the other as a diversity antenna, and the method includes:
a.) receiving measurement configuration information sent by a network device, wherein the measurement configuration information is used to instruct the terminal device to measure at least one inter-frequency cell, and in a measurement period for measuring the at least one inter-frequency cell:
   o a measurement frequency for measuring the at least one inter-frequency cell by the terminal device is equal to 1, and
   o a measurement gap length for measuring the at least one inter-frequency cell by the terminal device each time is greater than a first preset duration; and
b.) measuring the at least one inter-frequency cell based on the measurement configuration information by using the diversity antenna;
c.) obtaining a diversity measurement result of the at least one inter-frequency cell based on the measured at least one inter-frequency cell;
d.) measuring a serving cell serving the terminal device by using the main antenna and the diversity antenna separately, to obtain a main measurement result of the serving cell and a diversity measurement result of the serving cell;
e.) determining a measurement compensation value based on the main measurement result and the diversity measurement result, wherein the measurement compensation value is a difference between the main measurement result and the diversity measurement result;
f.) compensating the diversity measurement result of the at least one inter-frequency cell by using the measurement compensation value, to obtain a compensated measurement result of the at least one inter-frequency cell; and
g.) when a compensated measurement result of one or more inter-frequency cells meets a measurement event report condition, sending the compensated measurement result of the one or more inter-frequency cells to the network device.

According to an example, the terminal device may measure the inter-frequency cell based on the measurement configuration information by using the diversity antenna, while performing data transmission with a serving cell by using the main antenna. With the method, the terminal device can measure the inter-frequency cell without interrupting data transmission of the serving cell, thereby improving efficiency of data transmission between the terminal device and the serving cell.

In a possible implementation of the first aspect, the measurement configuration information includes: frequency information of the at least one inter-frequency cell, and identification information of a measurement gap pattern; and
the measurement gap pattern is used to indicate the measurement frequency for measuring the at least one inter-frequency cell by the terminal device in the measurement period, and the measurement gap length for measuring the at least one inter-frequency cell by the terminal device.

According to an example, the terminal device may measure the inter-frequency cell by using the diversity antenna and based on the frequency information of the at least one inter-frequency cell and the measurement gap pattern that are included in the measurement configuration information, while performing data transmission with the serving cell by using the main antenna. With the method, the terminal device can measure the inter-frequency cell without interrupting data transmission of the serving cell, thereby improving efficiency of data transmission between the terminal device and the serving cell.

In an example, the measurement frequency for measuring the at least one inter-frequency cell by the terminal device in the measurement period is 1.

According to an example, in the measurement period, the terminal device measures at least one inter-frequency cell once by using the measurement gap length, for example, 60 ms. This can implement the measurement on the inter-frequency cell while reducing a probability of antenna switching by the terminal device for inter-frequency cell measurement, thereby ensuring efficiency of data transmission between the terminal device and the serving cell.

In a possible implementation, the method further includes:
at a first time before measuring the at least one inter-frequency cell each time, sending, by the terminal device, first indication information to the network device, where the first indication information is used to indicate a capability of receiving data by the terminal device by using the main antenna, and an interval between the first time and a corresponding measurement start time is second preset duration.

According to an example, before starting to measure the at least one inter-frequency cell each time, the terminal device reports, to the network device, the first indication information used to indicate the capability of receiving data by the terminal device by using the main antenna, so that when the terminal device measures the at least one inter-frequency cell, the network device may adjust, based on the first indication information, a transmission rate used for transmitting data to the terminal. When the terminal device receives data by using a single antenna, this prevents the network device from sending data to the terminal device by still using a rate used when the two antennas are used to receive data. This reduces a bit error rate when the terminal device receives data by using the main antenna, and further improves data transmission efficiency.

In a possible implementation, the method further includes:
each time the terminal device measures the at least one inter-frequency cell by using the diversity antenna, receiving, by the terminal device by using the main antenna, data sent by the network device by using a first transmission rate, where the first transmission rate is a transmission rate determined by the network device based on the first indication information.

According to an example, each time the terminal device starts to measure the at least one inter-frequency cell, the terminal device may receive data that is sent by the network device by using a transmission rate adjusted based on the first indication information. When the terminal device receives data by using a single antenna, this prevents the network device from sending data to the terminal device by still using a rate used when the terminal device receives data by using the two antennas. This reduces a bit error rate when the terminal device receives data by using the main antenna, and further improves data transmission efficiency.

In a possible implementation, the method further includes:
at a second time before finishing measuring the at least one inter-frequency cell each time, sending, by the terminal device, second indication information to the network device, where the second indication information is used to indicate a capability of receiving data by the terminal device by using both the antennas, and an interval between the second time and a corresponding measurement end time is third preset duration.

According to an example, before finishing measuring the at least one inter-frequency cell each time, the terminal device reports, to the network device, the second indication information used to indicate the capability of receiving data by the terminal device by using both the antennas, so that after the terminal device measures the at least one inter-frequency cell, the network device may adjust, based on the second indication information, a transmission rate used for transmitting data to the terminal. When the terminal device receives data by using the two antennas, this prevents the network device from sending data to the terminal device by still using the rate used when the terminal device receives data by using a single antenna. This further improves data transmission efficiency.

In an example, the method further includes:
each time the terminal device finishes measuring the at least one inter-frequency cell, receiving, by the terminal device by using the main antenna and the diversity antenna, data sent by the network device by using a second transmission rate, where the second transmission rate is a transmission rate determined by the network device based on the second indication information, and the second transmission rate is greater than the first transmission rate.

According to an example, after measuring the at least one inter-frequency cell each time, the terminal device may receive data that is sent by the network device by using a transmission rate adjusted based on the second indication information. When the terminal device receives data by using the two antennas, this prevents the network device from sending data to the terminal device by still using the rate used when the terminal device receives data by using a single antenna. This improves data transmission efficiency.

In a possible implementation, after the measuring, by the terminal device, the at least one inter-frequency cell based on the measurement configuration information by using the diversity antenna, the method further includes:
stopping, by the terminal device, measuring the at least one inter-frequency cell when signal quality of all inter-frequency cells is lower than signal quality of a serving cell and the terminal device is currently in a non-moving state.

According to an example, when a network environment remains unchanged, the terminal device may not need to switch the diversity antenna from a frequency of the serving cell to a frequency of the inter-frequency cell in each measurement gap length of the measurement period; instead, the diversity antenna may continuously stay at the frequency of the serving cell and receive data from the serving cell together with the main antenna. This further improves data transmission efficiency.

In an example, the method further includes:
obtaining, by the terminal device, a diversity measurement result of the at least one inter-frequency cell;
compensating, by the terminal device, the diversity measurement result of the at least one inter-frequency cell by using a measurement compensation value, to obtain a compensated measurement result of the at least one inter-frequency cell, where the measurement compensation value is a difference between a measurement result obtained by the terminal device by performing measurement by using the main antenna and a measurement result obtained by the terminal device by performing measurement by using the diversity antenna; and
when a compensated measurement result of one or more inter-frequency cells meets a measurement event report condition, sending, by the terminal device, the compensated measurement result of the one or more inter-frequency cells to the network device.

According to an example, when receiving performance of the main antenna is superior to receiving performance of the diversity antenna, the terminal device may compensate, by using the measurement compensation value, the diversity measurement result of the at least one inter-frequency cell that is obtained through measurement by using the diversity antenna. This can improve accuracy of a measurement result obtained by measuring an inter-frequency cell by using the diversity antenna.

In an example, the method further includes:
measuring, by the terminal device, the serving cell by using the main antenna and the diversity antenna separately, to obtain a main measurement result of the serving cell and a diversity measurement result of the serving cell; and
determining, by the terminal device, the measurement compensation value based on the main measurement result and the diversity measurement result.

According to an example, the terminal device may determine, based on the main measurement result of the serving cell and the diversity measurement result of the serving cell, the measurement compensation value used for compensating the diversity measurement result of the at least one inter-frequency cell that is obtained through measurement by using the diversity antenna, so that the terminal device may accurately compensate, by using the measurement compensation value, the diversity measurement result of the at least one inter-frequency cell that is obtained through measurement by using the diversity antenna. This further improves accuracy of measuring an inter-frequency cell by using the diversity antenna.

In an example, the measuring, by the terminal device, the at least one inter-frequency cell based on the measurement configuration information by using the diversity antenna includes:
measuring, by the terminal device, the at least one inter-frequency cell based on the measurement configuration information by using each of the two antennas as the diversity antenna.

According to an example, the terminal device may measure the at least one inter-frequency cell by using each of the two antennas as the diversity antenna, and use a larger value of two measurement results as a measurement result of the inter-frequency cell, that is, use, as a final measurement result, a measurement result obtained by measuring the at least one inter-frequency cell by using an antenna with better receiving performance. This improves accuracy of a measurement result obtained by measuring an inter-frequency cell by using the diversity antenna.

In an example, the method further includes:
obtaining, by the terminal device, a measurement result that is obtained by measuring the at least one inter-frequency cell by using each of the two antennas; and
using, by the terminal device, a larger value of two measurement results as a measurement result of the at least one inter-frequency cell.

In an example, before the measuring, by the terminal device, the at least one inter-frequency cell based on the measurement configuration information by using the diversity antenna, the method further includes:
measuring, by the terminal device, the serving cell by using each of the two antennas, to obtain a first measurement result and a second measurement result of the serving cell; and
using, by the terminal device as the diversity antenna, an antenna corresponding to a larger value of the first measurement result and the second measurement result.

According to an example, the terminal device may measure the at least one inter-frequency cell by using an antenna with better receiving performance of the two antennas of the terminal device as the diversity antenna. This improves accuracy of a measurement result obtained by measuring an inter-frequency cell by using the diversity antenna.

In an example, a communications system to which the current serving cell of the terminal device belongs is an M^{th} generation communications system, the at least one inter-frequency cell is one inter-frequency cell, a communications system to which the inter-frequency cell belongs is an N^{th} generation communications system, and both M and N are positive integers greater than or equal to 1; and
the method further includes:
searching, by the terminal device, for a cell of the N^{th} generation communications system based on frequency information of a cell of the N^{th} generation communications system; and
when finding a cell of the N^{th} generation communications system in preset duration, measuring, by the terminal device, the cell of the N^{th} generation communications system by using the diversity antenna.

According to an example, when the terminal device camps on a cell of a communications system without an inter-frequency cell measurement process or mechanism, the terminal device may automatically measure an inter-frequency cell based on historically stored frequency information of the inter-frequency cell, and automatically switch to the inter-frequency cell when a switching condition is met. This improves user experience.

In an example, the method further includes:
switching, by the terminal device, from the serving cell to the cell of the N^{th} generation communications system when signal quality of the cell of the N^{th} generation communications system is higher than the signal quality of the serving cell.

According to an example, after measuring the cell of the N^{th} generation communications system by using the diversity antenna, the terminal device may switch from the serving cell to the cell of the N^{th} generation communications system when the signal quality of the cell of the N^{th} generation communications system is higher than the signal quality of the serving cell. This improves user experience.

In an example, the method further includes:
stopping, by the terminal device, searching for a cell of the N^{th} generation communications system when the terminal device finds no cell of the N^{th} generation communications system in the preset duration and the terminal device is currently in a non-moving state.

According to an example, when the terminal device finds no cell of the N^{th} generation communications system in the preset duration and the terminal device is currently in the non-moving state, it indicates that a network environment in which the terminal device is located is not going to change. In this scenario, the terminal device may temporarily stop searching for a cell of the N^{th} generation communications system, to reduce power consumption of the terminal device.

According to a second aspect, a terminal device is provided, where the terminal device comprises two antennas, one as a main antenna and the other as a diversity antenna, and the terminal device is configured to perform any of the previously described methods. According to an example, a terminal device is provided, where the terminal device includes two antennas, one antenna is used as a main antenna, and the other antenna is used as a diversity antenna. The terminal device further includes: a receiver, configured to receive measurement configuration information sent by a network device, and send the measurement configuration information to a processor; and the processor, configured to measure the at least one inter-frequency cell based on the measurement configuration information by using the diversity antenna.

In an example, the terminal device further includes a transmitter, configured to send indication information to the network device.

For a detailed implementation and a beneficial effect of the terminal device provided in the third aspect and the possible implementation of the third aspect, refer to the first aspect and the possible implementations of the first aspect, and a beneficial effect brought by the implementations. Details are not described herein again.

According to an example, a terminal device is provided, where the terminal device includes a processor, a memory, a receiver, and a transmitter, where both the receiver and the transmitter are coupled to the processor, the processor controls a receiving action of the receiver, and the processor controls a sending action of the transmitter; and
the memory is configured to store computer executable program code, the program code includes an instruction, and when the processor executes the instruction, the instruction enables the terminal device to perform the inter-frequency cell measurement method provided in the first aspect and the possible implementations of the first aspect.

According to an example, a chip is provided, where the chip includes a module or a unit configured to perform the inter-frequency cell measurement method provided in the first aspect and the possible implementations of the first aspect.

According to an example, a terminal device is provided, where the terminal device includes at least one processing element (or chip) configured to perform the method in the first aspect.

According to an example, a program is provided, where when being executed by a processor, the program is used to perform the inter-frequency cell measurement method provided in the first aspect and the possible implementations of the first aspect.

According to an example, a program product is provided, for example, a computer readable storage medium, including the program in the seventh aspect.

According to an example, a computer readable storage medium is provided, where the computer readable storage medium stores an instruction, and when the instruction is run on a computer, the computer is enabled to perform the inter-frequency cell measurement method provided in the first aspect and the possible implementations of the first aspect.

According to an example, the terminal device may measure the inter-frequency cell based on the measurement configuration information by using the diversity antenna, while performing data transmission with the serving cell by using the main antenna. With the method, the terminal device can measure the inter-frequency cell without interrupting data transmission of the serving cell, thereby improving efficiency of data transmission between the terminal device and the serving cell.

In the following description, embodiments of the invention are described with reference to figures 4, 6 to 8 and 13. The other described embodiments are provided for illustrative purposes for a better understanding of the invention.

### BRIEF DESCRIPTION OF DRAWINGS

FIG. 1 is a framework diagram of a communications system according to an embodiment of this application;
FIG. 2 is a schematic structural diagram of a transceiver of a terminal device in the prior art;
FIG. 3 is a schematic diagram of a measurement period in the prior art;
FIG. 4 is a signaling flowchart of an inter-frequency cell measurement method according to an embodiment of this application;
FIG. 5 is a schematic structural diagram of a transceiver of a terminal device according to an embodiment of this application;
FIG. 6 is a schematic diagram of a measurement period according to an embodiment of this application;
FIG. 7 is a signaling flowchart of another inter-frequency cell measurement method according to an embodiment of this application;
FIG. 8 is a signaling flowchart of still another inter-frequency cell measurement method according to an embodiment of this application;
FIG. 9 is a schematic structural diagram of a transceiver of another terminal device according to an embodiment of this application;
FIG. 10 is a schematic diagram of another measurement period according to an embodiment of this application;
FIG. 11 is a schematic flowchart of still another inter-frequency cell measurement method according to an embodiment of this application;
FIG. 12 is a schematic flowchart of still another inter-frequency cell measurement method according to an embodiment of this application;
FIG. 13 is a schematic structural diagram of a terminal device according to an embodiment of this application;
FIG. 14 is a schematic structural diagram of an apparatus according to this application; and
FIG. 15 is a schematic structural diagram of another terminal device according to an embodiment of this application.

### DESCRIPTION OF EMBODIMENTS

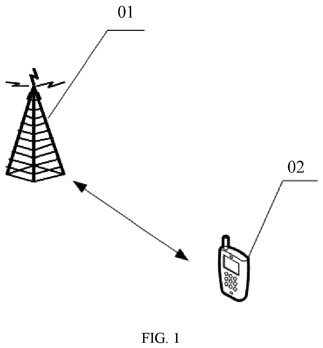

FIG. 1 is a framework diagram of a communications system according to an embodiment of this application. As shown in FIG. 1, the communications system includes a network device 01 and a terminal device 02. The network device mentioned herein is a network device to which a serving cell of the terminal device belongs.

The network device may be the foregoing base station or various wireless access points, or may be a device, in an access network, that communicates with a terminal device on an air interface through one or more sectors. The base station may be configured to mutually convert a received over-the-air frame and an IP packet and serve as a router between a wireless terminal and a rest portion of the access network, where the rest portion of the access network may include an Internet protocol (IP) network. The base station may coordinate attribute management of the air interface. For example, the base station may be a base transceiver station (base transceiver station, BTS) in a global system for mobile communications (global system of mobile communication, GSM) or code division multiple access (code division multiple access, CDMA), or may be a NodeB (NodeB, NB) in wideband code division multiple access (wideband code division multiple access, WCDMA), or may be an evolved NodeB (evolutional node B, eNB or eNodeB) in long term evolution (long term evolution, LTE), a relay station, an access point, a gNB gNB in a future 5G network, or the like. This is not limited herein.

The terminal device may be a wireless terminal or a wired terminal. The wireless terminal may be a device that provides a user with voice and/or other service data connectivity, a handheld device with a radio connection function, or another processing device connected to a radio modem. The wireless terminal may communicate with one or more core networks through a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile (mobile), a remote station (remote station), a remote terminal (remote terminal), an access terminal (access terminal), a user terminal (user terminal), a user agent (user agent), a user device (user device or user equipment), or a sensor with a network access function. This is not limited herein.

It should be noted that the communications system may be an LTE communications system, or may be another future communications system, for example, a 5G communications system. This is not limited herein.

The LTE communications system is used as an example. In an LTE communications system, a terminal device may report a plurality of types of measurement events to a network device (that is, a network device to which a serving cell on which the terminal device camps belongs), for example, events A1 to A5, and events B1 and B2. Details are as follows.

The A1 event indicates that signal quality of the serving cell is higher than a preset threshold. When the terminal device reports this event to the network device, the network device may instruct the terminal device to stop measuring an inter-frequency cell. That is, the A1 event is an event used to stop the terminal device from measuring an inter-frequency cell.

The inter-frequency cell mentioned herein includes: a neighboring cell (neighboring cell for short) that belongs to a same communications system but does not use a same frequency as the serving cell, a neighboring cell that does not belong to a same communications system as the serving cell, or a neighboring cell not with a same center frequency bandwidth as the serving cell.

The A2 event indicates that the signal quality of the serving cell is lower than the preset threshold. When the terminal device reports this event to the network device, the network device may instruct the terminal device to measure an inter-frequency cell. That is, the A2 event is an event used to trigger the terminal device to measure an inter-frequency cell.

The A3 event indicates that signal quality of an intra-system neighboring cell is higher than the signal quality of the serving cell. When the terminal device reports this event to the network device, the network device may instruct the terminal device to switch cells. This event is mainly used for switching based on cell coverage. That is, the A3 event is a measurement event used to trigger intra-system cell switching.

The intra-system neighboring cell mentioned herein is: a neighboring cell that belongs to a same communications system and uses a same frequency as the serving cell, or a neighboring cell that belongs to a same communications system but does not use a same frequency (namely, an inter-frequency cell) as the serving cell.

The A4 event indicates that signal quality of an intra-system neighboring cell is higher than the preset threshold. When the terminal device reports this event to the network device, the network device may instruct the terminal device to switch cells. This event is mainly used for switching based on load balancing. That is, the A4 event is also a measurement event used to trigger intra-system cell switching.

The A5 event indicates that the signal quality of the serving cell is lower than the preset threshold, and signal quality of an intra-system neighboring cell is higher than the preset threshold. When the terminal device reports this event to the network device, the network device may instruct the terminal device to switch cells. This event may be used for switching based on load balancing. That is, the A5 event is also a measurement event used to trigger intra-system cell switching.

The B 1 event indicates that signal quality of a high-priority inter-system neighboring cell is higher than the preset threshold. When the terminal device reports this event to the network device, the network device may instruct the terminal device to switch cells. That is, the B1 event is a measurement event used to trigger inter-system cell switching.

The inter-system neighboring cell mentioned herein is a neighboring cell that belongs to a communications system different from the communications system to which the serving cell belongs (namely, an inter-frequency cell).

The B2 event indicates that signal quality of an inter-system neighboring cell with a same or lower priority is higher than the preset threshold, and the signal quality of the serving cell is lower than the preset threshold. When the terminal device reports this event to the network device, the network device may instruct the terminal device to switch cells. That is, the B2 event is also a measurement event used to trigger inter-system cell switching.

In the LTE communications system, a terminal device in a connected mode may report an A2 event to the network device when the signal quality of the serving cell is lower than the preset threshold. Then, after receiving the A2 event, the network device may send measurement configuration information to the terminal device by using, for example, radio resource control (radio resource control, RRC) signaling, to instruct the terminal device to measure an inter-frequency cell, in other words, trigger the terminal device to measure the inter-frequency cell. The measurement configuration information may carry frequency information of the inter-frequency cell.

Currently, a terminal device may include a plurality of antennas (for example, two antennas or four antennas). Some of the plurality of antennas may be used as main antennas of the terminal device, and the rest antennas may be used as diversity antennas of the terminal device. A main antenna has sending and receiving capabilities, that is, the main antenna may receive data, and may also send data. A diversity antenna has only a receiving capability, that is, the diversity antenna can only receive data. The following describes an existing inter-frequency cell measurement manner by using a terminal device including two antennas as an example. One antenna is a main antenna, and the other antenna is a diversity antenna.

In the prior art, when the terminal device measures an inter-frequency cell based on measurement configuration information, the terminal device needs to switch both the main antenna and the diversity antenna to a frequency of the inter-frequency cell, and measure the inter-frequency cell based on a preset measurement period, measurement gap, and measurement gap repetition period. The measurement period mentioned herein is a period for periodically measuring an inter-frequency cell by the terminal device. The measurement gap is duration for measuring an inter-frequency cell once by the terminal device in the measurement period. The measurement gap repetition period is a quantity of times for repeatedly measuring an inter-frequency cell by the terminal device in the measurement period. In a specific implementation, the terminal device may measure reference signal received quality (reference signal receiving quality, RSRQ) or reference signal received power (reference signal receiving power, RSRP) of an inter-frequency cell. This may be specifically determined based on measurement configuration information of a network device. For how the terminal device measures RSRQ or RSRP of an inter-frequency cell, refer to the prior art. Details are not described herein.

Currently, a measurement period, a measurement gap, and a measurement gap repetition period that are defined in an existing 3rd generation partnership project (3rd generation partnership project, 3GPP) protocol may be shown in Table 1 below:

**Table 1**

| Index | Measurement period | Measurement gap (Gap) length (ms) | Gap repetition period (ms) |
|---|---|---|---|
| 0 | 480 milliseconds (ms) | 6 | 40 |
| 1 | 480 ms | 6 | 80 |

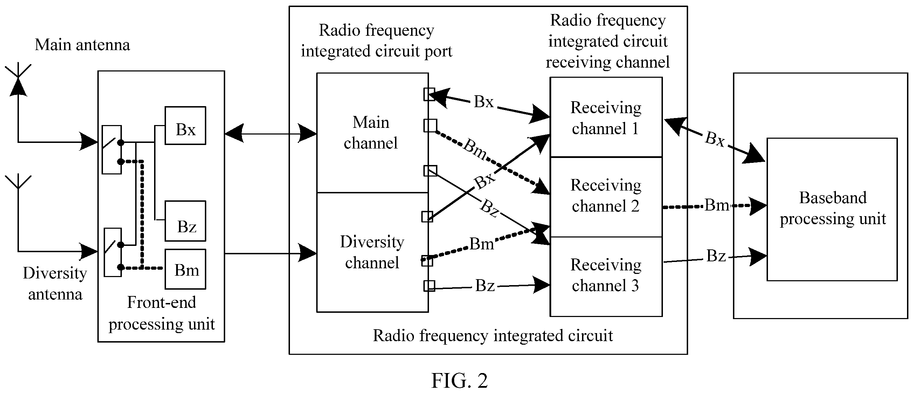

FIG. 2 is a schematic structural diagram of a transceiver of a terminal device in the prior art. As shown in FIG. 2, the transceiver of the terminal device includes a main antenna, a diversity antenna, a front-end processing unit, a radio frequency integrated circuit port, a radio frequency integrated circuit receiving channel, and a baseband processing unit.

The front-end processing unit is configured to control a frequency on which the main antenna and the diversity antenna camp.

The radio frequency integrated circuit port includes a main channel (configured to send, to a corresponding receiving channel, a signal received by the main antenna; or send, to the main antenna, a signal sent from a corresponding receiving channel) connected to the main antenna, and a diversity channel (configured to send, to a corresponding receiving channel, a signal received by the diversity antenna) connected to the diversity antenna. A quantity of radio frequency integrated circuit ports is in a one-to-one correspondence with a quantity of carriers used by a serving cell. For example, when the quantity of carriers is 4, the quantity of radio frequency integrated circuit ports may be 4.

The radio frequency integrated circuit receiving channel includes a plurality of receiving channels, and is configured to combine signals of a same carrier that are received by the main channel and the diversity channel. A quantity of radio frequency integrated circuit receiving channels is in a one-to-one correspondence with the quantity of carriers used by the serving cell. For example, when the quantity of carriers is 4, there may be four radio frequency integrated circuit receiving channels.

The baseband processing unit is configured to process, for example, demodulate, decode, or measure, a signal sent from a receiving channel.

A person skilled in the part may understand that the transceiver of the terminal device shown in FIG. 2 is merely an example, and in a specific implementation, the transceiver may further include some other units and modules, for example, an analog-to-digital conversion unit. This is not described in detail herein.

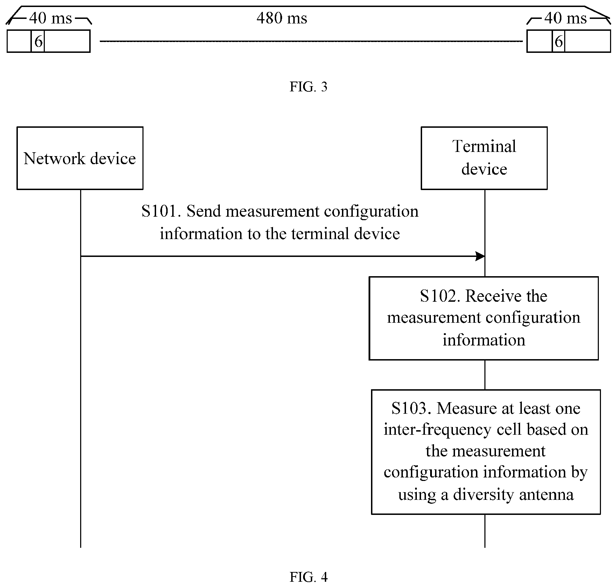

FIG. 3 is a schematic diagram of a measurement period in the prior art. As shown in FIG. 2 and FIG. 3, it is assumed that Bx is a frequency at which a primary component carrier (Component Carrier, cc) of a serving cell is located, Bm is a frequency of a to-be-measured inter-frequency cell, and Bz is a frequency at which a secondary cc of the serving cell is located. An index 0 is used as an example. When a measurement period, a measurement gap, and a measurement gap repetition period that are corresponding to the index 0 are used to measure the inter-frequency cell, in a measurement period of 480 ms, the front-end processing unit of the transceiver of the terminal device switches the main antenna and the diversity antenna from the frequencies (Bx and Bz) of the serving cell to the frequency (Bm) of the inter-frequency cell for 6 ms in every 40 ms, so that the baseband processing unit may measure the inter-frequency cell based on signals of the inter-frequency cell that are received by the main antenna and the diversity antenna. However, in other time in the 40 ms, the front-end processing unit of the transceiver of the terminal device makes the main antenna and the diversity antenna camp on the frequencies (Bx and Bz) of the serving cell, to receive data sent by the serving cell, or send data to the serving cell by using the main antenna. A person skilled in the art may understand that FIG. 2 shows the schematic diagram of the transceiver in an example in which the serving cell includes two cc-s, and in a specific implementation, a frequency on which the transceiver camps may be adjusted based on a quantity of cc-s included in the serving cell. In addition, in the figure, a path indicated by a solid line is a currently connected path, and a path indicated by a dashed line is a currently non-connected path. Meanings indicated by a solid line and a dashed line in subsequent diagrams of transceivers are similar and are therefore not described again.

To sum up, in a process of measuring the inter-frequency cell by the terminal device by using the main antenna and the diversity antenna, the terminal device cannot receive, by using the main antenna and the diversity antenna, data sent by the serving cell, and cannot send data to the serving cell by using the main antenna either, so that data transmission efficiency is relatively low.

Considering the foregoing problem, an embodiment of this application provides an inter-frequency cell measurement method, so that a terminal device may measure an inter-frequency cell by using a diversity antenna, while receiving data from or sending data to a serving cell by using a main antenna. That is, the inter-frequency cell is measured without data transmission of the serving cell interrupted, thereby improving data transmission efficiency. It may be understood that the inter-frequency cell measurement method provided in this embodiment of this application includes but is not limited to the foregoing application scenario. The inter-frequency cell measurement method provided in this embodiment of this application may be applied to any scenario in which a terminal device including at least two antennas measures an inter-frequency cell. These are not listed one by one herein.

The following describes the technical solutions in this application in detail by using some embodiments. The following several embodiments may be combined with each other, and a same or similar concept or process may not be described repeatedly in some embodiments.

FIG. 4 is a signaling flowchart of an inter-frequency cell measurement method according to an embodiment of this application. In this embodiment, a terminal device may measure an inter-frequency cell by using a diversity antenna, while receiving data from or sending data to a serving cell by using a main antenna. As shown in FIG. 4, the method may include the following steps:
S101. A network device sends measurement configuration information to the terminal device.
S102. The terminal device receives the measurement configuration information.
S103. The terminal device measures at least one inter-frequency cell based on the measurement configuration information by using the diversity antenna.

Specifically, when the network device receives an A2 event (that is, an event indicating that signal quality of the serving cell is lower than a preset threshold) reported by the terminal device, the network device may send the measurement configuration information to the terminal device, to instruct the terminal device to measure the at least one inter-frequency cell, that is, trigger the terminal device to measure the at least one inter-frequency cell. In a specific implementation, the network device may send the measurement configuration information to the terminal device by using existing RRC signaling, or may send the measurement configuration information to the terminal device by using other signaling, for example, physical layer signaling or media access control (Media Access Control, MAC) signaling. This is not limited herein.

Optionally, the measurement configuration information may include frequency information of the at least one inter-frequency cell. The network device may instruct, by sending the frequency information of the at least one inter-frequency cell, the terminal device to measure the at least one inter-frequency cell. In this scenario, a measurement period, measurement frequency, and a gap length that are used for measuring the at least one inter-frequency cell may be preset on the terminal device. The measurement frequency is used to indicate how many gaps may be used by the terminal device to measure the at least one inter-frequency cell in one measurement period. It should be noted that locations of a plurality of gaps in the measurement period, and interval duration between any two adjacent gaps are not limited in this embodiment of this application. For example, the plurality of gaps may be evenly distributed in the measurement period, or may be randomly distributed in the measurement period.

Optionally, the measurement configuration information may include frequency information of the at least one inter-frequency cell, and identification information of a gap pattern (Pattern). The network device may instruct, by sending the measurement configuration information, the terminal device to measure the at least one inter-frequency cell. The identification information of the gap pattern may be, for example, an index of the gap pattern. The gap pattern may be used to indicate one or more of the measurement period, the measurement frequency, and the gap length that are used for measuring the at least one inter-frequency cell. If one of the measurement period, the measurement frequency, and the gap length is not indicated by the gap pattern, this content may be preset on the terminal device. An example in which the gap pattern indicates the measurement frequency and the gap length is used. In this example, the measurement period and a plurality of gap patterns may be preset on the terminal device, and each gap pattern is corresponding to one measurement frequency and one gap length. In this scenario, the plurality of gap patterns are corresponding to the same measurement period.

In this embodiment, the measurement frequency is a positive integer greater than or equal to 1, and the gap length is greater than first preset duration. The first preset duration may be specifically determined based on a system configuration. For example, the first preset duration may be 6 ms, 8 ms, or 10 ms.

Currently, an existing 3GPP protocol stipulates that an inter-frequency cell needs to be measured for at least 60 ms in each measurement period. 60 ms is used as an example. Assuming that the first preset duration is 6 ms, the measurement period, the measurement frequency, and the gap length may include, for example, several combinations shown in Table 2 below:

**Table 2**

| Index | Measurement period | Gap length (ms) | Measurement frequency |
|---|---|---|---|
| 0 | 480 ms | 60 | 1 |
| 1 | 480 ms | 30 | 2 |
| 2 | 480 ms | 20 | 3 |

The measurement period, the gap, and the measurement frequency shown in Table 2 can not only meet the requirement of the 3GPP protocol for inter-frequency cell measurement duration, but also reduce frequency for switching the diversity antenna of the terminal device from frequencies (Bx and Bz) of the serving cell to a frequency (Bm) of an inter-frequency cell, thereby reducing power consumption of the terminal device.

It may be understood that Table 2 is merely an example, and the measurement period, the gap length, and the measurement frequency mentioned in this embodiment of this application are not limited thereto. In addition, in a future communications system, the aforementioned measurement period, gap length, and measurement frequency may be still referred to as the foregoing terms, or may be referred to as other terms. Therefore, names of the measurement period, the gap length, and the measurement frequency in various communications systems are not limited in this embodiment of this application.

In this embodiment, after receiving the measurement configuration information sent by the network device, the terminal device may measure the at least one inter-frequency cell based on the measurement configuration information by using the diversity antenna, when receiving data sent by or sending data to the serving cell by using the main antenna. Optionally, in each measurement period, the terminal device may measure RSRQ or RSRP of the at least one inter-frequency cell in each gap based on the measurement frequency. The RSRQ or the RSRP is a measurement result of the at least one inter-frequency cell. This may be specifically determined based on a configuration of the network device. According to the foregoing manner, the terminal device can measure the inter-frequency cell without interrupting data transmission of the serving cell, thereby improving data transmission efficiency.

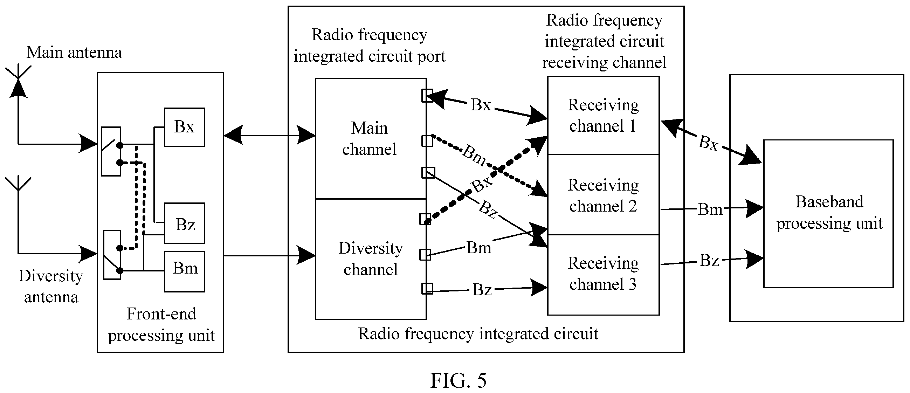

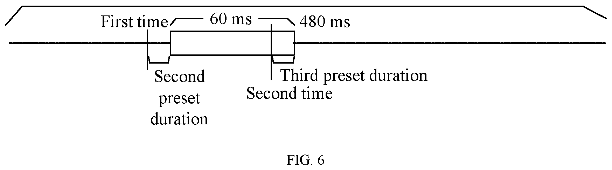

FIG. 5 is a schematic structural diagram of a transceiver of a terminal device according to an embodiment of this application. FIG. 6 is a schematic diagram of a measurement period according to an embodiment of this application. As shown in FIG. 5 and FIG. 6, it is assumed that Bx is a frequency at which a primary cc of a serving cell is located, Bm is a frequency of a to-be-measured inter-frequency cell, and Bz is a frequency at which a secondary cc of the serving cell is located. The index 0 shown in Table 2 is used as an example. When a measurement period, a gap, and measurement frequency that are corresponding to the index 0 are used to measure an inter-frequency cell, in a measurement period of 480 ms, a front-end processing unit of the transceiver of the terminal device switches a diversity antenna from the frequencies (Bx and Bz) of the serving cell to the frequency (Bm) of the inter-frequency cell only during a gap of 60 ms, so that the terminal device may measure the inter-frequency cell by using the diversity antenna (for example, a baseband processing unit may measure the inter-frequency cell based on signals of the inter-frequency cell that are received by a main antenna and the diversity antenna). During the gap of 60 ms, the front-end processing unit of the transceiver of the terminal device keeps the main antenna camping at the frequencies (Bx and Bz) of the serving cell, so that the terminal device may still use the main antenna and the diversity antenna for data transmission. However, in other time in the 480 ms, the front-end processing unit of the transceiver of the terminal device may make the main antenna and the diversity antenna camp on the frequencies (Bx and Bz) of the serving cell, to receive data sent by the serving cell, or send data to the serving cell by using the main antenna.

According to this manner, the terminal device can measure the inter-frequency cell without interrupting data transmission of the serving cell, thereby improving data transmission efficiency. In addition, when measuring the inter-frequency cell by using the measurement period, the gap, and the measurement frequency that are corresponding to the index 0, the terminal device can measure the at least one inter-frequency cell while reducing a probability of antenna switching by the terminal device for inter-frequency cell measurement, thereby ensuring efficiency of data transmission between the terminal device and the serving cell.

As mentioned above, when signal quality of the serving cell is lower than a preset threshold, the terminal device may report an A2 event to a network device, so that the network device triggers the terminal device to measure the at least one inter-frequency cell. In a measurement process, when a report condition of any one of the foregoing events A3 to A5 and B 1 to B2 is met, the terminal device may report the event to the network device, to trigger cell switching. Alternatively, when a report condition of the A1 event is met, the terminal device may report the event to the network device, so that the network device triggers the terminal device to stop measuring the at least one inter-frequency cell. Due to network coverage reasons, for example, an indoor signal in a building in which the terminal device is located is relatively weak, signal quality of a neighboring cell may be lower than the signal quality of the serving cell, and the signal quality of the serving cell may be lower than the preset threshold, that is, the signal quality of the serving cell is best. In this case, if the terminal device is in a non-moving state, indicating that a network environment in which the terminal device is located is not going to change, even if the terminal device periodically measures the at least one inter-frequency cell based on the measurement period, the gap, and the measurement frequency, no measurement result meeting the report condition of any one of the events A3 to A5 and B1 to B2 is obtained. Therefore, the terminal device may stop measuring the at least one inter-frequency cell when signal quality of all inter-frequency cells is lower than the signal quality of the serving cell and the terminal device is currently in the non-moving state.

According to this manner, the terminal device may not need to switch the diversity antenna from the frequencies of the serving cell to the frequency of the inter-frequency cell during each gap; instead, the diversity antenna may continuously stay at the frequencies of the serving cell and receive data from the serving cell together with the main antenna. This further improves data transmission efficiency.

In a specific implementation, the terminal device may determine, based on a measurement result of each inter-frequency cell and a measurement result of the serving cell, whether the signal quality of all the inter-frequency cells is lower than the signal quality of the serving cell. For example, when a measurement result RSRP of an inter-frequency cell is less than a measurement result RSRP of the serving cell, it is determined that signal quality of the inter-frequency cell is lower than the signal quality of the serving cell. Alternatively, the terminal device may determine, based on a historically stored optimal-frequency cell, whether the serving cell is the optimal-frequency cell, and when the serving cell is the optimal-frequency cell, further determine whether the signal quality of all the inter-frequency cells is lower than the signal quality of the serving cell. Correspondingly, the terminal device may determine, based on data of a sensor (for example, an acceleration sensor) of the terminal device, whether the terminal device is currently in a moving state; or the terminal device may determine, based on data of a counter of the terminal device, whether the terminal device is currently in a moving state; or the like. This is not described in detail.

According to the inter-frequency cell measurement method provided in this embodiment of this application, the terminal device may measure the inter-frequency cell based on the measurement configuration information by using the diversity antenna, while performing data transmission with the serving cell by using the main antenna. With the method, the terminal device can measure the inter-frequency cell without interrupting data transmission of the serving cell, thereby improving efficiency of data transmission between the terminal device and the serving cell.

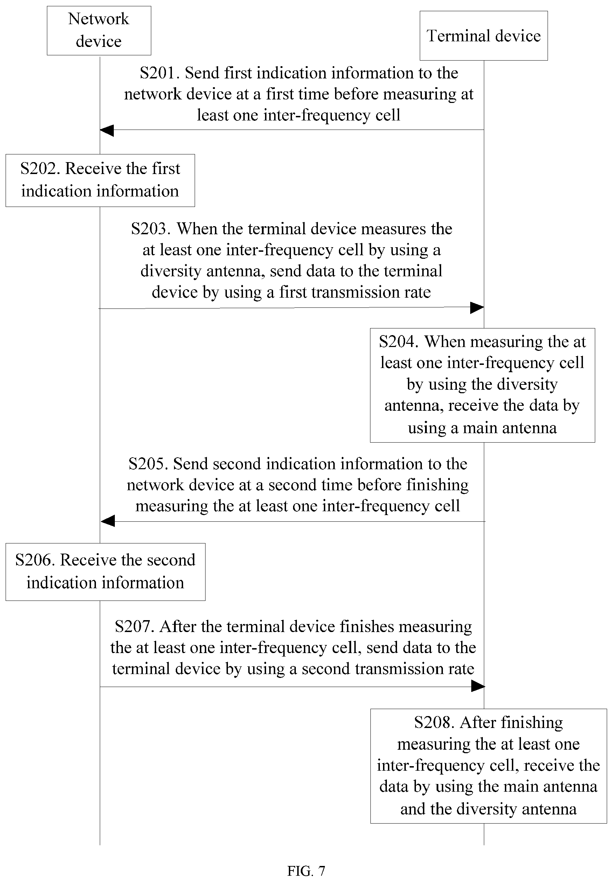

FIG. 7 is a signaling flowchart of another inter-frequency cell measurement method according to an embodiment of this application. Based on the foregoing embodiment, at a first time before each gap in the measurement period, the terminal device may further send, to the network device, first indication information used to indicate a capability of receiving data by the terminal device by using the main antenna, so that the network device may adjust a transmission rate based on a receiving capability of an antenna used by the terminal device. As shown in FIG. 7, in a process of performing step S103 by the terminal device, the method may further include the following steps:
S201. The terminal device sends the first indication information to the network device at the first time before measuring the at least one inter-frequency cell.
S202. The network device receives the first indication information.
S203. When the terminal device measures the at least one inter-frequency cell by using the diversity antenna, the network device sends data to the terminal device by using a first transmission rate.
S204. When measuring the at least one inter-frequency cell by using the diversity antenna, the terminal device receives the data by using the main antenna.
S205. The terminal device sends second indication information to the network device at a second time before finishing measuring the at least one inter-frequency cell.
S206. The network device receives the second indication information.
S207. After the terminal device finishes measuring the at least one inter-frequency cell, the network device sends data to the terminal device by using a second transmission rate.
S208. After finishing measuring the at least one inter-frequency cell, the terminal device receives the data by using the main antenna and the diversity antenna.

Still referring to FIG. 6, in this embodiment, the terminal device may send the first indication information to the network device at the first time before measuring the at least one inter-frequency cell (that is, before a gap starts). The first indication information is used to indicate the capability of receiving data by the terminal device by using the main antenna. If the network device sends data to the terminal device during the gap, the network device may adjust, during the gap (that is, when the terminal device measures the at least one inter-frequency cell by using the diversity antenna) and based on the first indication information sent at the first time before the gap, a transmission rate to the first transmission rate that matches the capability of receiving data by the terminal device by using the main antenna. A rate for receiving data by the terminal device by using both the main antenna and the diversity antenna is greater than a rate for receiving data by using only the main antenna. Therefore, according to the foregoing manner, the network device may adjust a transmission rate based on a receiving capability of an antenna used by the terminal device. When the terminal device receives data by using only the main antenna, this prevents the network device from sending data by still using a relatively high transmission rate, so as to reduce a bit error rate of data transmission and further improve data transmission efficiency. An interval between the first time and a corresponding measurement start time (that is, a start time of the gap) is second preset duration. The second preset duration may be specifically determined based on a configuration of the network device. For example, the second preset duration may be TA duration.

In this scenario, the terminal device may send the second indication information to the network device at the second time before finishing measuring the at least one inter-frequency cell (that is, before the gap ends). The second indication information may be used to indicate a capability of receiving data by the terminal device by using both the antennas. In this way, after the terminal device finishes measuring the at least one inter-frequency cell (that is, after the gap ends), the network device may adjust, based on the second indication information, a transmission rate to the second transmission rate that matches the capability of receiving data by the terminal device by using both the main antenna and the diversity antenna. The second transmission rate is greater than the first transmission rate. According to the foregoing manner, the network device may adjust a transmission rate based on a receiving capability of an antenna used by the terminal device, thereby further improving data transmission efficiency. An interval between the second time and a corresponding measurement end time (that is, an end time of the gap) is third preset duration. The third preset duration may be specifically determined based on a configuration of the network device. For example, the third preset duration may be TA duration.

Optionally, a measurement result obtained by the terminal device by measuring a frequency of the serving cell by using the main antenna may indicate the capability of receiving data by the terminal device by using the main antenna. Therefore, the first indication information may carry the measurement result obtained by the terminal device by measuring the frequency of the serving cell by using the main antenna, to indicate the capability of receiving data by the terminal device by using the main antenna. For details about a measurement result used to indicate a capability of receiving data by using a main antenna in each communications system, refer to the prior art. This is not described in detail. Using an LTE communications system as an example, the measurement result obtained by the terminal device by measuring the frequency of the serving cell by using the main antenna may include one or more of the following: a channel quality indicator (channel quality indicator, CQI), a precoding matrix indicator (precoding matrix indicator, PMI), and a rank indicator (rank indicator, RI). If the terminal device performs data transmission with the network device through carrier aggregation (carrier aggregation, CA), the first indication information may include a measurement result obtained by the terminal device by measuring each cc by using the main antenna.

Optionally, an identifier used to indicate the capability of receiving data by the terminal device by using the main antenna may be preset on the terminal device and the network device. Therefore, the terminal device may alternatively send first indication information carrying the identifier, to indicate the capability of receiving data by the terminal device by using the main antenna.

The capability of receiving data by the terminal device by using the main antenna may be preset on the terminal device; or may be obtained by the terminal device by measuring the capability of receiving data by the terminal device by using the main antenna; or may be obtained by the terminal device by measuring, before the gap, the capability of receiving data by the terminal device by using the main antenna. For how the terminal device measures the capability of receiving data by the terminal device by using the main antenna, refer to the prior art. This is not described in detail.

Optionally, the second indication information may carry a measurement result obtained by the terminal device by measuring the frequency of the serving cell by using the two antennas, to indicate the capability of receiving data by the terminal device by using both the antennas. Optionally, an identifier used to indicate the capability of receiving data by the terminal device by using both the antennas may be preset on the terminal device and the network device. Therefore, the terminal device may alternatively send second indication information carrying the identifier, to indicate the capability of receiving data by the terminal device by using both the antennas. The capability of receiving data by the terminal device by using both the antennas may be preset on the terminal device; or may be obtained by the terminal device by measuring, before the terminal device measures the at least one inter-frequency cell by using the diversity antenna, the capability of receiving data by the terminal device by using both the antennas. For how the terminal device measures the capability of receiving data by the terminal device by using both the antennas, refer to the prior art. This is not described in detail.

Although the foregoing embodiment describes the foregoing process by using a gap in the measurement period as an example, a person skilled in the art may understand that the terminal device may perform the foregoing process for each gap. An implementation principle and a technical effect thereof are similar. This is not described in detail.

According to the inter-frequency cell measurement method provided in this embodiment of this application, the network device may adjust, based on indication information that is reported by the terminal device and that is used to indicate a receiving capability of an antenna currently used by the terminal device, a transmission rate used for transmitting data to the terminal, thereby further improving data transmission efficiency.

Due to an influence of a location of the terminal device or a manner of using the terminal device by a user holding the terminal device (for example, due to a cause that a location of an antenna is blocked by a building, or an antenna is blocked by the user holding the terminal device), there is a deviation in measurement results obtained by the terminal device by measuring a same cell by using the two antennas separately, that is, there is a deviation in receiving performance of the two antennas. To be specific, when the terminal device measures a same cell, a measurement result obtained by the terminal device by measuring the cell by using an antenna with better receiving performance is greater than a measurement result obtained by the terminal device by measuring the cell by using an antenna with poorer receiving performance, so that accuracy of a measurement result is relatively low when the terminal device measures an inter-frequency cell by using the antenna with poorer receiving performance. Therefore, when the terminal device measures the at least one inter-frequency cell by using the diversity antenna, the following manners may be used to improve accuracy of an inter-frequency cell measurement result. Details are as follows:

First manner: After measuring the at least one inter-frequency cell by using the diversity antenna, the terminal device compensates, by using a measurement compensation value, a diversity measurement result of the at least one inter-frequency cell that is obtained through measurement by using the diversity antenna. Details are as follows.

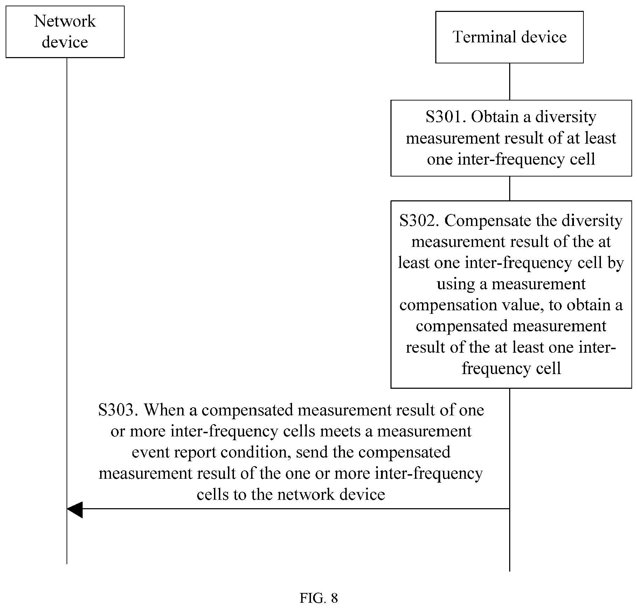

FIG. 8 is a signaling flowchart of still another inter-frequency cell measurement method according to an embodiment of this application. As shown in FIG. 8, after step S103, the method includes the following steps:
S301. The terminal device obtains a diversity measurement result of the at least one inter-frequency cell.
S302. The terminal device compensates the diversity measurement result of the at least one inter-frequency cell by using the measurement compensation value, to obtain a compensated measurement result of the at least one inter-frequency cell.
S303. When a compensated measurement result of one or more inter-frequency cells meets a measurement event report condition, the terminal device sends the compensated measurement result of the one or more inter-frequency cells to the network device.

After measuring the at least one inter-frequency cell by using the diversity antenna and based on the measurement period, the gap, and the measurement frequency, the terminal device may obtain the diversity measurement result of the at least one inter-frequency cell. The diversity measurement result of the at least one inter-frequency cell includes a diversity measurement result obtained by measuring the at least one inter-frequency cell by using the diversity antenna during each gap of each measurement period.

In this embodiment, if a measurement result obtained by the terminal device by measuring the serving cell by using the main antenna is greater than a measurement result obtained by the terminal device by measuring the serving cell by using the diversity antenna, it indicates that receiving performance of the main antenna is superior to receiving performance of the diversity antenna. In this case, after obtaining the diversity measurement result of the at least one inter-frequency cell, the terminal device may compensate the diversity measurement result of the at least one inter-frequency cell by using the measurement compensation value, to improve accuracy of a measurement result obtained by measuring an inter-frequency cell by using the diversity antenna. Then, when a compensated measurement result of one or more inter-frequency cells meets a report condition of any one of the aforementioned measurement events A3 to A5 and B 1 to B2, the terminal device may send the compensated measurement result (that is, an accurate measurement result) of the one or more inter-frequency cells to the network device by reporting the measurement event. The aforementioned measurement compensation value is a difference between a measurement result obtained by the terminal device by performing measurement by using the main antenna and a measurement result obtained by the terminal device by performing measurement by using the diversity antenna.

Optionally, the terminal device may add a diversity measurement result of each inter-frequency cell up to the measurement compensation value, to obtain a compensated measurement result of each inter-frequency cell. Alternatively, the terminal device may multiply the measurement compensation value by a preset coefficient, and add a resulting product up to a diversity measurement result of each inter-frequency cell, to obtain a compensated measurement result of each inter-frequency cell. The preset coefficient may be configured by the network device, or may be determined by the terminal device based on a frequency, location information of the terminal device, or the like.

The measurement compensation value may be a measurement compensation value preset on the terminal device. In some embodiments, the terminal device may measure the serving cell by using the main antenna and the diversity antenna separately, to obtain a main measurement result of the serving cell and a diversity measurement result of the serving cell. Then the terminal device may determine the measurement compensation value based on the main measurement result and the diversity measurement result. For example, the terminal device may subtract the diversity measurement result from the main measurement result, to obtain the measurement compensation value. Alternatively, for example, the terminal device may divide the main measurement result by the diversity measurement result, to obtain the measurement compensation value.

According to the inter-frequency cell measurement method provided in this embodiment of this application, when receiving performance of the main antenna is superior to receiving performance of the diversity antenna, the terminal device may compensate, by using the measurement compensation value, the diversity measurement result of the at least one inter-frequency cell that is obtained through measurement by using the diversity antenna. This can improve accuracy of a measurement result obtained by measuring an inter-frequency cell by using the diversity antenna.

Second manner: The terminal device measures the at least one inter-frequency cell by using each of the two antennas as the diversity antenna, and uses a larger value of two measurement results as a measurement result of the at least one inter-frequency cell. In this implementation, step S103 specifically includes:
measuring, by the terminal device, the at least one inter-frequency cell based on the measurement configuration information by using each of the two antennas as the diversity antenna.

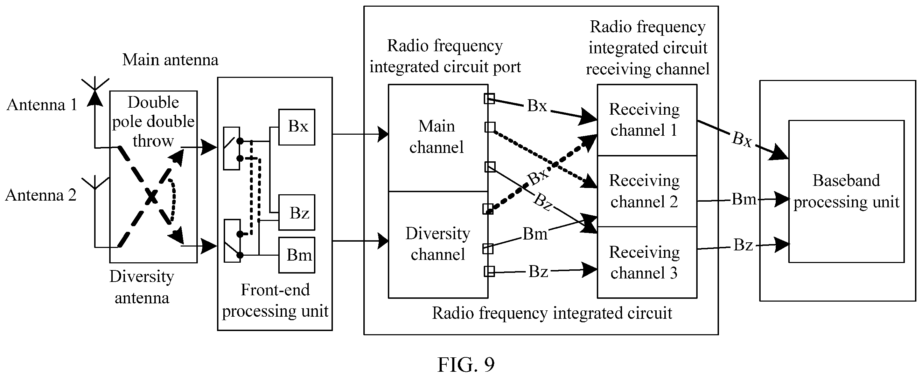

FIG. 9 is a schematic structural diagram of a transceiver of another terminal device according to an embodiment of this application. As shown in FIG. 9, in this embodiment, the terminal device includes an antenna 1 and an antenna 2. A double pole double throw (Double Pole Double Throw, DPDT) switch may be disposed on the receiver, so that the receiver of the terminal device may perform main antenna/diversity antenna switching between the antenna 1 and the antenna 2 by using the double pole double throw switch, that is, use each of the antenna 1 and the antenna 2 as a diversity antenna. It should be noted that, when the antenna 1 is used as the diversity antenna of the terminal device, the antenna 2 is a main antenna of the terminal device (that is, the antenna 1 is connected to a diversity channel, and the antenna 2 is connected to a main channel). When the antenna 2 is used as the diversity antenna of the terminal device, the antenna 1 is the main antenna of the terminal device (that is, the antenna 1 is connected to the main channel, and the antenna 2 is connected to the diversity channel). FIG. 9 shows the schematic diagram in an example in which the antenna 1 is the main antenna of the terminal device, and the antenna 2 is used as the diversity antenna of the terminal device. Certainly, the transceiver of the terminal device may alternatively implement switching between the two antennas in another existing connection manner. This is not described in detail.

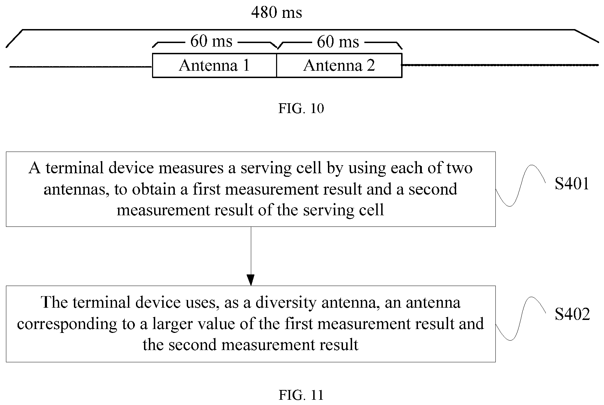

FIG. 10 is a schematic diagram of another measurement period according to an embodiment of this application. As shown in FIG. 9 and FIG. 10, it is assumed that Bx is a frequency at which a primary cc of a serving cell is located, Bm is a frequency of a to-be-measured inter-frequency cell, and Bz is a frequency at which a secondary cc of the serving cell is located. The index 0 shown in Table 2 is used as an example. When a measurement period, a gap, and measurement frequency that are corresponding to the index 0 are used to measure an inter-frequency cell, in a measurement period of 480 ms, the terminal device may measure at least one inter-frequency cell by using each of the antenna 1 and the antenna 2 as the diversity antenna.

For example, the antenna 1 is first used as the diversity antenna. In a measurement period, a front-end processing unit of the transceiver of the terminal device may first switch the antenna 1 from the frequencies (Bx and Bz) of the serving cell to a frequency (Bm) of the inter-frequency cell, to measure the inter-frequency cell in a gap of 60 ms by using the antenna 1 (for example, a baseband processing unit may measure the inter-frequency cell based on a signal of the inter-frequency cell that is received by the antenna 1). Then the transceiver of the terminal device performs main antenna/diversity antenna switching between the antenna 1 and the antenna 2 by using the double pole double throw switch, to use the antenna 2 as the diversity antenna. The front-end processing unit of the transceiver of the terminal device switches the antenna 2 from the frequencies (Bx and Bz) of the serving cell to the frequency (Bm) of the inter-frequency cell, to measure the inter-frequency cell in a gap of 60 ms by using the antenna 2 (for example, the baseband processing unit may measure the inter-frequency cell based on a signal of the inter-frequency cell that is received by the antenna 2). That is, in a measurement period of 480 ms, the terminal device measures the inter-frequency cell for 60 ms by using each of the two antennas in turn. Optionally, if the antenna 2 is an original main antenna of the terminal device, after the terminal device measures the inter-frequency cell by using the antenna 2, the transceiver may perform switching between the antenna 1 and the antenna 2 again by using the double pole double throw switch, to restore the antenna 2 as the main antenna of the terminal device.

After measuring the at least one inter-frequency cell based on the measurement configuration information by using each of the two antennas as the diversity antenna, the terminal device may obtain a measurement result that is obtained by measuring the at least one inter-frequency cell by using each of the two antennas, and use a larger value of two measurement results as a measurement result of the at least one inter-frequency cell, that is, use, as a final measurement result, a measurement result obtained by measuring the at least one inter-frequency cell by using an antenna with better receiving performance. This improves accuracy of a measurement result obtained by measuring an inter-frequency cell by using the diversity antenna.

Corresponding to the foregoing example, the terminal device may compare a measurement result that is obtained by measuring each inter-frequency cell in 60 ms and that is corresponding to the antenna 2, with a measurement result that is obtained by measuring the inter-frequency cell in 60 ms and that is corresponding to the antenna 1, and select a larger value as a measurement result of the inter-frequency cell in the gap. Then, when a measurement result of one or more inter-frequency cells meets a report condition of any one of the aforementioned measurement events A3 to A5 and B1 to B2, the terminal device may send the measurement result of the one or more inter-frequency cells to the network device by reporting the measurement event. According to this manner, accuracy of a measurement result obtained by measuring an inter-frequency cell by using the diversity antenna can be improved.

It should be noted that, although the foregoing example describes a process of measuring the at least one inter-frequency cell by using each of the two antennas as the diversity antenna in an example in which one measurement period includes one gap, a person skilled in the art may understand that, when the one measurement period includes m gaps, that is, the measurement frequency is m, the terminal device may measure the inter-frequency cell m times in the measurement period by using each of the two antennas as the diversity antenna, that is, measure the inter-frequency cell for a total of 2m times in the one measurement period. In addition, the measurement period shown in FIG. 10 is merely an example. In a specific implementation, gaps corresponding to the two antennas may be adjacent or not adjacent.

According to the inter-frequency cell measurement method provided in this embodiment of this application, the terminal device may measure the at least one inter-frequency cell by using each of the two antennas as the diversity antenna, and use a larger value of two measurement results as a measurement result of the inter-frequency cell, that is, use, as a final measurement result, a measurement result obtained by measuring the at least one inter-frequency cell by using an antenna with better receiving performance. This improves accuracy of a measurement result obtained by measuring an inter-frequency cell by using the diversity antenna.

Third manner: The terminal device measures the at least one inter-frequency cell by using an antenna with better receiving performance of the two antennas of the terminal device as the diversity antenna. Details are as follows.

FIG. 11 is a schematic flowchart of still another inter-frequency cell measurement method according to an embodiment of this application. As shown in FIG. 11, before step S103, the method may further include the following steps:
S401. The terminal device measures the serving cell by using each of the two antennas, to obtain a first measurement result and a second measurement result of the serving cell.
S402. The terminal device uses, as the diversity antenna, an antenna corresponding to a larger value of the first measurement result and the second measurement result.

Specifically, in this embodiment, before measuring the at least one inter-frequency cell, the terminal device may measure the serving cell by using each of the two antennas. For example, the terminal device may measure RSRP of a primary cc of the serving cell by using each of the two antennas. Then the terminal device may compare the two measurement results obtained by measuring the serving cell by using the two antennas, to determine an antenna with better receiving performance of the two antennas of the terminal device. When the terminal device measures a same measurement object by using an antenna, a larger value of a measurement result indicates a better signal condition (that is, better receiving performance) of the antenna. Therefore, in this embodiment, the terminal device may use, as the diversity antenna, the antenna corresponding to the larger value of the two measurement results.

In this case, the terminal device may measure the at least one inter-frequency cell by using the diversity antenna and based on the measurement configuration information sent by the network device. Because a signal condition of the diversity antenna is better, accuracy of a measurement result obtained by the terminal device by measuring the at least one inter-frequency cell by using the diversity antenna is higher. This improves accuracy of a measurement result obtained by measuring an inter-frequency cell by using the diversity antenna. Then, when a measurement result of one or more inter-frequency cells meets a report condition of any one of the aforementioned measurement event A3 to A5 and B 1 to B2, the terminal device may send the measurement result of the one or more inter-frequency cells to the network device by reporting the measurement event.

According to the inter-frequency cell measurement method provided in this embodiment of this application, the terminal device may measure the at least one inter-frequency cell by using an antenna with better receiving performance of the two antennas of the terminal device as the diversity antenna. This improves accuracy of a measurement result obtained by measuring an inter-frequency cell by using the diversity antenna.

It should be noted that the terminal device may measure the at least one inter-frequency cell by using any one of the foregoing three manners. Alternatively, the terminal device may measure the at least one inter-frequency cell by selecting a manner different from the foregoing manners according to a current service requirement of the terminal device. For example, when the terminal device currently has a voice service, the terminal device may measure the at least one inter-frequency cell by using the second manner or the third manner, to ensure that the network device can accurately switch cells for the terminal device based on an inter-frequency cell measurement result, so as to avoid a call drop during cell switching. For example, when the terminal device currently has a data service, the terminal device may measure the at least one inter-frequency cell by using the first manner, to prevent the measurement of the at least one inter-frequency cell from affecting the current data service.

Currently, an existing 3GPP protocol does not constrain a process of measuring an inter-frequency cell in all communications systems, that is, some communications systems have no inter-frequency cell measurement process or mechanism. Therefore, in the prior art, when a terminal device is within a cell coverage area of these communications systems, even if quality of a serving cell is lower than a preset threshold, a network device cannot trigger the terminal device to measure an inter-frequency cell. A 2G communications system or a 3G communications system is used as an example, when a terminal device camping on a cell of a 4G communications system moves to a location such as an elevator or a basement, because 4G signal quality is lower than a preset threshold, the terminal device switches from the cell of the 4G communications system to a cell of the 2G communications system or a cell of the 3G communications system by using the foregoing measurement event. Because the 2G communications system or the 3G communications system has no corresponding mechanism to trigger a terminal device in a connected mode to measure an inter-frequency cell, when moving back to a coverage area of the cell of the 4G communications system, the terminal device cannot switch to the cell of the 4G communications system by performing the foregoing inter-frequency cell measurement process, resulting in relatively poor user experience.

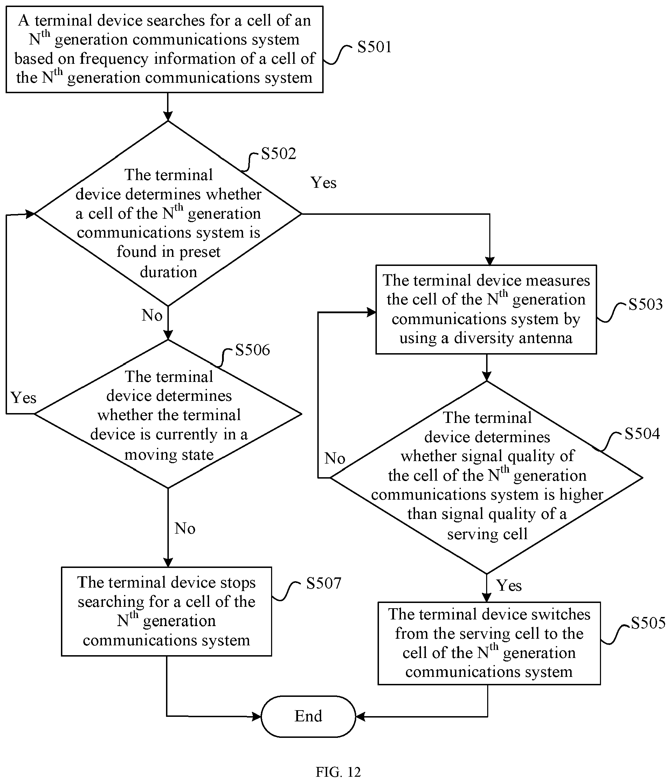

However, in this embodiment, when the terminal device is located in a coverage area of these communications systems, the terminal device may automatically start inter-frequency cell measurement and switching. Specifically, FIG. 12 is a schematic flowchart of still another inter-frequency cell measurement method according to an embodiment of this application. In this embodiment, one inter-frequency cell is used as an example. A communications system to which a serving cell in which a terminal device is located belongs is an M^{th} generation communications system. A communications system to which the inter-frequency cell belongs is an N^{th} generation communications system. Both M and N are positive integers greater than or equal to 1. N may be greater than M, or N may be less than M. As shown in FIG. 12, the method may include the following steps:
S501. The terminal device searches for a cell of the N^{th} generation communications system based on frequency information of a cell of the N^{th} generation communications system.
S502. The terminal device determines whether a cell of the N^{th} generation communications system is found in preset duration. If a cell of the N^{th} generation communications system is found, the terminal device performs step S503; or if no cell of the N^{th} generation communications system is found, the terminal device performs step S506.
S503. The terminal device measures the cell of the N^{th} generation communications system by using a diversity antenna.
S504. The terminal device determines whether signal quality of the cell of the N^{th} generation communications system is higher than signal quality of the serving cell. If the signal quality of the cell of the N^{th} generation communications system is higher than the signal quality of the serving cell, the terminal device performs step S505; or if the signal quality of the cell of the N^{th} generation communications system is not higher than the signal quality of the serving cell, the terminal device returns to step S503.
S505. The terminal device switches from the serving cell to the cell of the N^{th} generation communications system.
S506. The terminal device determines whether the terminal device is currently in a moving state. If the terminal device is currently in a moving state, the terminal device performs step S502; or if the terminal device is currently not in a moving state, the terminal device performs step S507.
S507. The terminal device stops searching for a cell of the N^{th} generation communications system.

Specifically, in this embodiment, when the signal quality of the serving cell of the terminal device is lower than a preset threshold, the terminal device may search for a cell of the N^{th} generation communications system in the preset duration based on historically stored frequency information of a cell of the N^{th} generation communications system. The preset duration may be specifically determined based on a configuration of a communications system.

If the terminal device can find a cell of the N^{th} generation communications system in the preset duration, the terminal device may measure the cell of the N^{th} generation communications system by using the diversity antenna. For how the terminal device measures the cell of the N^{th} generation communications system by using the diversity antenna, refer to the foregoing embodiment. In addition, a measurement period, a gap, and measurement frequency that are used by the terminal device to measure the cell of the N^{th} generation communications system by using the diversity antenna may be preset. Alternatively, a plurality of combinations of a measurement period, a gap, and measurement frequency may be preset on the terminal device. Each combination may be corresponding to, for example, one communications system.

After measuring the cell of the N^{th} generation communications system by using the diversity antenna, the terminal device may compare a measurement result of the cell of the N^{th} generation communications system with a measurement result of the serving cell. If the measurement result of the cell of the N^{th} generation communications system is greater than the measurement result of the serving cell, it indicates that signal quality of the cell of the N^{th} generation communications system is higher than signal quality of the serving cell. In this scenario, the terminal device may switch from the serving cell to the cell of the N^{th} generation communications system. For example, the terminal device may request a network device to which the serving cell belongs to release a radio link. After the radio link is released, the terminal device enters an idle mode from a connected mode. Then the terminal device may search for and camp on the cell of the N^{th} generation communications system, and establish a radio link to the network device to which the serving cell belongs, so as to restore a data service.

If the measurement result of the cell of the N^{th} generation communications system is less than the measurement result of the serving cell, it indicates that the signal quality of the cell of the N^{th} generation communications system is lower than the signal quality of the serving cell. In this scenario, the terminal device may continue to perform step S503, that is, measure the cell of the N^{th} generation communications system by using the diversity antenna.

If the terminal device finds no cell of the N^{th} generation communications system in the preset duration, the terminal device may further determine whether the terminal device is currently in a moving state. If the terminal device is currently in a non-moving state, it indicates that a network environment in which the terminal device is located is not going to change. In this scenario, the terminal device may temporarily stop searching for a cell of the N^{th} generation communications system, to reduce power consumption of the terminal device. If the terminal device is currently in a moving state, it indicates that a network environment in which the terminal device is located may change at any time. In this scenario, the terminal device may return to step S502, to continuously search for a cell of the N^{th} generation communications system. In this way, when moving to a coverage area of a cell of the N^{th} generation communications system, the terminal device can quickly switch to the cell of the N^{th} generation communications system, thereby improving user experience. For details about how the terminal device determines whether the terminal device is currently in a moving state, refer to the descriptions in the foregoing embodiment. This is not described in detail again.

Using a 2G communications system as an example, a terminal device camping on a cell of the 2G communications system may search for a cell of an LTE communications system in preset duration based on historically stored frequency information of a cell of the LTE communications system. Then, after finding a cell of the LTE communications system, the terminal device may measure the cell of the LTE communications system by using a diversity antenna. Further, when signal quality of the cell of the LTE communications system is higher than signal quality of the cell of the 2G communications system, the terminal device may automatically switch from the cell of the 2G communications system to the cell of the LTE communications system, thereby improving user experience.

Alternatively, the terminal device camping on the cell of the 2G communications system may receive frequency information, sent by a network device, of a cell of the LTE communications system, and search for a cell of the LTE communications system in the preset duration. Then, after finding a cell of the LTE communications system, the terminal device may measure the cell of the LTE communications system by using the diversity antenna. Further, when signal quality of the cell of the LTE communications system is higher than the signal quality of the cell of the 2G communications system, the terminal device may automatically switch from the cell of the 2G communications system to the cell of the LTE communications system, thereby improving user experience.

It may be understood that, in this embodiment, the terminal device may measure the cell of the N^{th} generation communications system by still using the manners in the foregoing embodiment, or may measure the cell of the N^{th} generation communications system by using an existing measurement manner. That is, this embodiment may be used as an independent embodiment, and is not necessarily dependent on the foregoing embodiment.

According to the inter-frequency cell measurement method provided in this embodiment of this application, when the terminal device camps on a cell of a communications system without an inter-frequency cell measurement process or mechanism, the terminal device may automatically measure an inter-frequency cell based on historically stored frequency information of the inter-frequency cell, and automatically switch to the inter-frequency cell when a switching condition is met. This improves user experience.

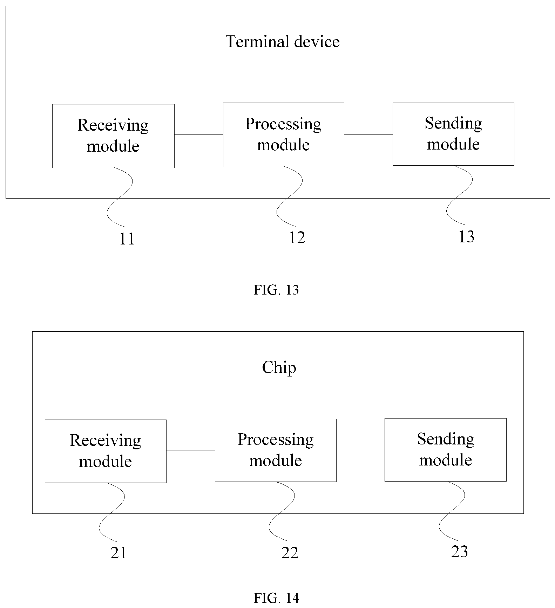

FIG. 13 is a schematic structural diagram of a terminal device according to an embodiment of this application. As shown in FIG. 13, the terminal device includes two antennas (not shown in FIG. 13). One antenna is used as a main antenna, and the other antenna is used as a diversity antenna. The terminal device may further include a receiving module 11 and a processing module 12. Optionally, the terminal device may further include a sending module 13.

The receiving module 11 is configured to receive measurement configuration information sent by a network device. The measurement configuration information is used to instruct the terminal device to measure at least one inter-frequency cell. In a measurement period for measuring the at least one inter-frequency cell, measurement frequency for measuring the at least one inter-frequency cell by the terminal device is a positive integer greater than or equal to 1 and a measurement gap length for measuring the at least one inter-frequency cell by the terminal device each time is greater than first preset duration. Optionally, the measurement configuration information includes: frequency information of the at least one inter-frequency cell, and identification information of a measurement gap pattern. The measurement gap pattern is used to indicate the measurement frequency for measuring the at least one inter-frequency cell by the terminal device in the measurement period, and the measurement gap length for measuring the at least one inter-frequency cell by the terminal device. For example, the measurement frequency for measuring the at least one inter-frequency cell by the terminal device in the measurement period is 1.

The processing module 12 is configured to measure the at least one inter-frequency cell based on the measurement configuration information by using the diversity antenna.

Optionally, in some embodiments, the sending module 13 is configured to: at a first time before the processing module 12 measures the at least one inter-frequency cell each time, send first indication information to the network device, where the first indication information is used to indicate a capability of receiving data by the terminal device by using the main antenna, and an interval between the first time and a corresponding measurement start time is second preset duration. Correspondingly, the receiving module 11 is further configured to: each time the processing module 12 measures the at least one inter-frequency cell by using the diversity antenna, receive, by using the main antenna, data sent by the network device by using a first transmission rate, where the first transmission rate is a transmission rate determined by the network device based on the first indication information.

Further, the sending module 13 is further configured to: at a second time before the processing module 12 stops measuring the at least one inter-frequency cell each time, send second indication information to the network device, where the second indication information is used to indicate a capability of receiving data by the terminal device by using both the antennas, and an interval between the second time and a corresponding measurement end time is third preset duration. Correspondingly, the receiving module 11 is further configured to: each time the processing module 12 finishes measuring the at least one inter-frequency cell, receive, by using the main antenna and the diversity antenna, data sent by the network device by using a second transmission rate, where the second transmission rate is a transmission rate determined by the network device based on the second indication information, and the second transmission rate is greater than the first transmission rate.

Optionally, in some embodiments, the processing module 12 is further configured to: after measuring the at least one inter-frequency cell based on the measurement configuration information by using the diversity antenna, stop measuring the at least one inter-frequency cell when signal quality of all inter-frequency cells is lower than signal quality of a serving cell and the terminal device is currently in a non-moving state.

Optionally, in some embodiments, the processing module 12 is further configured to: obtain a diversity measurement result of the at least one inter-frequency cell, and compensate the diversity measurement result of the at least one inter-frequency cell by using a measurement compensation value, to obtain a compensated measurement result of the at least one inter-frequency cell, where the measurement compensation value is a difference between a measurement result obtained by the terminal device by performing measurement by using the main antenna and a measurement result obtained by the terminal device by performing measurement by using the diversity antenna. The sending module 13 is further configured to: when a compensated measurement result of one or more inter-frequency cells meets a measurement event report condition, send the compensated measurement result of the one or more inter-frequency cells to the network device. For example, the processing module 12 is further configured to: measure the serving cell by using the main antenna and the diversity antenna separately, to obtain a main measurement result of the serving cell and a diversity measurement result of the serving cell; and determine the measurement compensation value based on the main measurement result and the diversity measurement result.

Optionally, in some embodiments, the processing module 12 is specifically configured to measure the at least one inter-frequency cell based on the measurement configuration information by using each of the two antennas as the diversity antenna. In this implementation, the processing module 12 is further configured to: obtain a measurement result that is obtained by measuring the at least one inter-frequency cell by using each of the two antennas, and use a larger value of two measurement results as a measurement result of the at least one inter-frequency cell.

Optionally, in some embodiments, the processing module 12 is further configured to: before measuring the at least one inter-frequency cell based on the measurement configuration information by using the diversity antenna, measure the serving cell by using each of the two antennas, to obtain a first measurement result and a second measurement result of the serving cell; and use, as the diversity antenna, an antenna corresponding to a larger value of the first measurement result and the second measurement result.

Optionally, in some embodiments, a communications system to which the current serving cell of the terminal device belongs is an M^{th} generation communications system, the at least one inter-frequency cell is one inter-frequency cell, a communications system to which the inter-frequency cell belongs is an N^{th} generation communications system, and both M and N are positive integers greater than or equal to 1.

In this scenario, the processing module 12 is further configured to: search for a cell of the N^{th} generation communications system based on frequency information of a cell of the N^{th} generation communications system, and when finding a cell of the N^{th} generation communications system in preset duration, measure the cell of the N^{th} generation communications system by using the diversity antenna.

Optionally, the processing module 12 is further configured to: switch from the serving cell to the cell of the N^{th} generation communications system when signal quality of the cell of the N^{th} generation communications system is higher than the signal quality of the serving cell.

Optionally, the processing module 12 is further configured to stop searching for a cell of the N^{th} generation communications system when no cell of the N^{th} generation communications system is found in the preset duration and the terminal device is currently in a non-moving state.

The terminal device provided in this embodiment of this application may perform the actions of the terminal device in the foregoing method embodiment. An implementation principle and a technical effect thereof are similar. Details are not described herein again.

FIG. 14 is a schematic structural diagram of an apparatus according to this application. As shown in FIG. 14, the apparatus may be a chip. The chip includes a module or a unit configured to perform the actions of the terminal device in the foregoing method embodiment, for example, a receiving module 21 (also referred to as a receiving unit), a processing module 22 (also referred to as a processing unit), or a sending module 23 (also referred to as a sending unit). An implementation principle and a technical effect thereof are similar. Details are not described herein again.

It should be noted that, it should be understood that the sending module may be a transmitter in an actual implementation; the receiving module may be a receiver in an actual implementation; and the processing module may be implemented in a form of software invoked by a processing element, or may be implemented in a form of hardware. For example, the processing module may be an independently disposed processing element, or may be integrated in a chip of the device. Alternatively, the processing module may be stored in a memory of the device in a form of program code, and a processing element of the device invokes and executes a function of the processing module. In addition, all or some of the modules may be integrated, or may be independently implemented. The processing element may be an integrated circuit and has a signal processing capability. In an implementation process, steps in the foregoing methods or the foregoing modules can be implemented by using a hardware integrated logic circuit in the processing element, or by using instructions in a form of software.

For example, the modules may be configured as one or more integrated circuits to implement the foregoing method, for example, one or more application-specific integrated circuits (application-specific integrated circuit, ASIC), one or more microprocessors (digital signal processor, DSP), or one or more field programmable gate arrays (field programmable gate array, FPGA). For another example, when one of the modules is implemented by a processing element by invoking program code, the processing element may be a general purpose processor, such as a central processing unit (central processing unit, CPU for short), or another processor that can invoke program code. For another example, the modules may be integrated, and implemented in a form of a system-on-a-chip (system-on-a-chip, SOC for short).

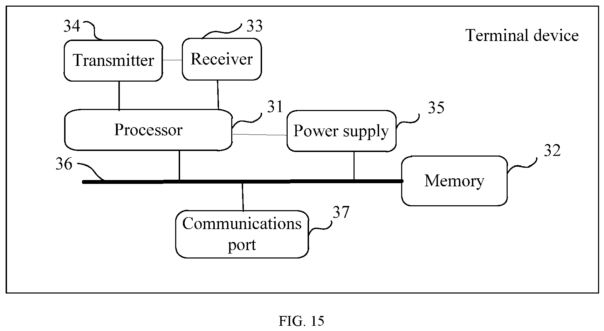

FIG. 15 is a schematic structural diagram of another terminal device according to an embodiment of this application. As shown in FIG. 15, the terminal device includes two antennas (not shown in FIG. 15). One antenna is used as a main antenna, and the other antenna is used as a diversity antenna. The terminal device may further include a processor 31 (for example, a CPU), a memory 32, a receiver 33, and a transmitter 34. Both the receiver 33 and the transmitter 34 are coupled to the processor 31. The processor 31 controls a receiving action of the receiver 33, and controls a sending action of the transmitter 34. The memory 32 may include a high-speed RAM memory, or may include a nonvolatile memory NVM, for example, at least one magnetic disk memory. The memory 32 may store various instructions used to perform various processing functions and implement the method steps in the embodiments of this application. Optionally, the terminal device in this embodiment of this application may further include a power supply 35, a communications bus 36, and a communications port 37. The receiver 33 and the transmitter 34 may be integrated in a transceiver (also referred to as a transceiver) of the terminal device, or may be independent sending and receiving antennas on the terminal device. The communications bus 36 is configured to implement a communications connection between elements. The communications port 37 is configured to implement a connection and communication between the terminal device and another peripheral device.

In this embodiment of this application, the memory 32 is configured to store computer executable program code. The program code includes an instruction. When the processor 31 executes the instruction, the instruction enables the processor 31 to perform the processing action of the terminal device in the foregoing method embodiment, enables the receiver 33 to perform the receiving action of the terminal device in the foregoing method embodiment, and enables the transmitter 34 to perform the sending action of the terminal device in the foregoing method embodiment. An implementation principle and a technical effect thereof are similar. Details are not described herein again.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

## Claims

1. An inter-frequency cell measurement method performed by a terminal device, the terminal device comprising two antennas, one as a main antenna and the other as a diversity antenna, and the method comprises:
**a.)** receiving measurement configuration information sent by a network device (S 102), wherein the measurement configuration information is used to instruct the terminal device to measure at least one inter-frequency cell, and in a measurement period for measuring the at least one inter-frequency cell:
∘ a measurement frequency for measuring the at least one inter-frequency cell by the terminal device is equal to 1, and
∘ a measurement gap length for measuring the at least one inter-frequency cell by the terminal device each time is greater than a first preset duration; and
**b.)** measuring the at least one inter-frequency cell based on the measurement configuration information by using the diversity antenna (S 103);
**c.)** obtaining a diversity measurement result of the at least one inter-frequency cell based on the measured at least one inter-frequency cell (S 301);
**d.)** measuring a serving cell serving the terminal device by using the main antenna and the diversity antenna separately, to obtain a main measurement result of the serving cell and a diversity measurement result of the serving cell;
**e.)** determining a measurement compensation value based on the main measurement result and the diversity measurement result, wherein the measurement compensation value is a difference between the main measurement result and the diversity measurement result;
**f.)** compensating the diversity measurement result of the at least one inter-frequency cell by using the measurement compensation value, to obtain a compensated measurement result of the at least one inter-frequency cell (S 302); and
**g.)** when a compensated measurement result of one or more inter-frequency cells meets a measurement event report condition, sending the compensated measurement result of the one or more inter-frequency cells to the network device (S 303).

2. The method according to claim 1, wherein the measurement configuration information comprises: frequency information of the at least one inter-frequency cell, and identification information of a measurement gap pattern; and
the measurement gap pattern is used to indicate the measurement frequency for measuring the at least one inter-frequency cell by the terminal device in the measurement period and the measurement gap length for measuring the at least one inter-frequency cell by the terminal device.

3. The method according to claim 1 or 2, wherein the method further comprises:
at a first time before measuring the at least one inter-frequency cell each time, sending first indication information to the network device, wherein the first indication information is used to indicate a capability of receiving data by the terminal device by using the main antenna, and an interval between the first time and a corresponding measurement start time is a second preset duration.

4. The method according to claim 3, wherein the method further comprises:
each time the terminal device measures the at least one inter-frequency cell by using the diversity antenna, receiving, by using the main antenna, data sent by the network device by using a first transmission rate, wherein the first transmission rate is a transmission rate determined by the network device based on the first indication information.

5. The method according to claim 4, wherein the method further comprises:
at a second time before finishing measuring the at least one inter-frequency cell each time, sending second indication information to the network device, wherein the second indication information is used to indicate a capability of receiving data by the terminal device by using both the antennas, and an interval between the second time and a corresponding measurement end time is a third preset duration.

6. The method according to any one of claims 1 to 5, wherein after the measuring the at least one inter-frequency cell based on the measurement configuration information by using the diversity antenna, the method further comprises:
stopping measuring the at least one inter-frequency cell when signal quality of all inter-frequency cells is lower than signal quality of the serving cell and the terminal device is currently in a non-moving state.

7. A terminal device, wherein the terminal device comprises two antennas, one as a main antenna and the other as a diversity antenna, and the terminal device is configured to perform any of the methods according to claims 1 - 6.

## Patentansprüche

1. Inter-Frequenz-Zellenmessungsverfahren, das durch ein Endgerät durchgeführt wird, wobei das Endgerät zwei Antennen, von denen eine eine Hauptantenne und die andere eine Diversitätsantenne ist, umfasst und das Verfahren Folgendes umfasst:
**a.)** Empfangen von durch ein Netzgerät gesendeten Messungskonfigurationsinformationen (S 102), wobei die Messungskonfigurationsinformationen dazu genutzt werden, um das Endgerät zum Messen mindestens einer Inter-Frequenz-Zelle anzuweisen, wobei in einem Messzeitraum zum Messen der mindestens einen Inter-Frequenz-Zelle gilt:
• eine Messfrequenz zum Messen der mindestens einen Inter-Frequenz-Zelle durch das Endgerät ist gleich 1 und
• eine Messlückendauer zum jedes Mal erfolgenden Messen der mindestens einen Inter-Frequenz-Zelle durch das Endgerät ist länger als ein erster vorgegebener Zeitabschnitt;
**b.)** Messen der mindestens einen Inter-Frequenz-Zelle basierend auf den Messungskonfigurationsinformationen unter Nutzung der Diversitätsantenne (S 103);
**c.)** Erhalten eines Diversitätsmessergebnisses der mindestens einen Inter-Frequenz-Zelle basierend auf der mindestens einen gemessenen Inter-Frequenz-Zelle (S 301);
**d.)** separates Messen einer versorgenden Zelle, die das Endgerät versorgt, unter Nutzung der Hauptantenne und der Diversitätsantenne, um ein Hauptmessergebnis der versorgenden Zelle und ein Diversitätsmessergebnis der versorgenden Zelle zu erhalten;
**e.)** Bestimmen eines Messkompensationswerts basierend auf dem Hauptmesswert und dem Diversitätsmessergebnis, wobei der Messkompensationswert eine Differenz zwischen dem Hauptmessergebnis und dem Diversitätsmessergebnis ist;
**f.)** Kompensieren des Diversitätsmessergebnisses der mindestens einen Inter-Frequenz-Zelle unter Nutzung des Messkompensationswerts, um ein kompensiertes Messergebnis der mindestens einen Inter-Frequenz-Zelle zu erhalten (S 302); und,
**g.)** wenn ein kompensiertes Messergebnis einer oder mehrerer Inter-Frequenz-Zellen eine Messereignismeldebedingung erfüllt, Senden des kompensierten Messergebnisses der einen oder der mehreren Inter-Frequenz-Zellen an das Netzgerät (S 303).

2. Verfahren nach Anspruch 1, wobei die Messungskonfigurationsinformationen Folgendes umfassen: Frequenzinformationen der mindestens einen Inter-Frequenz-Zelle und Kennungsinformationen eines Messlückenmusters; und
wobei das Messlückenmuster dazu genutzt wird, um die Messfrequenz zum Messen der mindestens einen Inter-Frequenz-Zelle durch das Endgerät in dem Messzeitraum und die Messlückendauer zum Messen der mindestens einen Inter-Frequenz-Zelle durch das Endgerät anzuzeigen.

3. Verfahren nach Anspruch 1 oder 2, wobei das Verfahren ferner Folgendes umfasst: zu einem ersten Zeitpunkt vor dem jedes Mal erfolgenden Messen der mindestens einen Inter-Frequenz-Zelle Senden erster Anzeigeinformationen an das Netzgerät, wobei die ersten Anzeigeinformationen dazu genutzt werden, um eine Fähigkeit zum Empfangen von Daten durch das Endgerät unter Nutzung der Hauptantenne anzuzeigen, und ein Intervall zwischen dem ersten Zeitpunkt und einem entsprechenden Messstartzeitpunkt ein zweiter vorgegebener Zeitabschnitt ist.

4. Verfahren nach Anspruch 3, wobei das Verfahren ferner Folgendes umfasst:
jedes Mal, wenn das Endgerät die mindestens eine Inter-Frequenz-Zelle unter Nutzung der Diversitätsantenne misst, Empfangen von durch das Netzgerät unter Nutzung einer ersten Übertragungsrate gesendeten Daten unter Nutzung der Hauptantenne, wobei die erste Übertragungsrate eine durch das Netzgerät basierend auf den ersten Anzeigeinformationen bestimmte Übertragungsrate ist.

5. Verfahren nach Anspruch 4, wobei das Verfahren ferner Folgendes umfasst:
zu einem zweiten Zeitpunkt vor dem Beenden der jedes Mal erfolgenden Messung der mindestens einen Inter-Frequenz-Zelle Senden zweiter Anzeigeinformationen an das Netzgerät, wobei die zweiten Anzeigeinformationen dazu genutzt werden, um eine Fähigkeit zum Empfangen von Daten durch das Endgerät unter Nutzung beider Antennen anzuzeigen, und ein Intervall zwischen dem zweiten Zeitpunkt und einem entsprechenden Messendzeitpunkt ein dritter vorgegebener Zeitabschnitt ist.

6. Verfahren nach einem der Ansprüche 1 bis 5, wobei das Verfahren nach dem Messen der mindestens einen Inter-Frequenz-Zelle basierend auf den Messungskonfigurationsinformationen unter Nutzung der Diversitätsantenne ferner Folgendes umfasst:
Stoppen der Messung der mindestens einen Inter-Frequenz-Zelle, wenn eine Signalqualität aller Inter-Frequenz-Zellen geringer als eine Signalqualität der versorgenden Zelle ist und das Endgerät momentan in einem Zustand ist, in dem es sich nicht bewegt.

7. Endgerät, wobei das Endgerät zwei Antennen, von denen eine eine Hauptantenne und die andere eine Diversitätsantenne ist, umfasst und das Endgerät konfiguriert ist, um eines der Verfahren nach den Ansprüchen 1-6 durchzuführen.

## Revendications

1. Procédé de mesure de cellule inter-fréquence réalisé par un dispositif terminal, le dispositif terminal comprenant deux antennes, l'une constituant une antenne principale et l'autre une antenne de diversité, et le procédé comprenant :
a.) la réception d'informations de configuration de mesure envoyées par un dispositif de réseau (S 102), dans lequel les informations de configuration de mesure servent à ordonner au dispositif terminal de mesurer au moins une cellule inter-fréquence, et dans une période de mesure pour mesurer l'au moins une cellule inter-fréquence :
∘ une fréquence de mesure pour mesurer l'au moins une cellule inter-fréquence par le dispositif terminal est égale à 1, et
∘ une longueur d'intervalle de mesure pour mesurer l'au moins une cellule inter-fréquence par le dispositif terminal est chaque fois supérieure à une première durée prédéfinie ; et
b.) la mesure de l'au moins une cellule inter-fréquence en fonction des informations de configuration de mesure à l'aide de l'antenne de diversité (S 103) ;
c.) l'obtention d'un résultat de mesure de diversité de l'au moins une cellule inter-fréquence en fonction de l'au moins une cellule inter-fréquence mesurée (S 301) ;
d.) la mesure d'une cellule de desserte desservant le dispositif terminal en utilisant séparément l'antenne principale et l'antenne de diversité, afin d'obtenir un résultat de mesure principal de la cellule de desserte et un résultat de mesure de diversité de la cellule de desserte ;
e.) la détermination d'une valeur de compensation de mesure basée sur le résultat de mesure principal et le résultat de mesure de diversité, dans lequel la valeur de compensation de mesure est une différence entre le résultat de mesure principal et le résultat de mesure de diversité ;
f.) la compensation du résultat de mesure de diversité de l'au moins une cellule inter-fréquence en utilisant la valeur de compensation de mesure, afin d'obtenir un résultat de mesure compensé de l'au moins une cellule inter-fréquence (S 302) ; et
g.) quand un résultat de mesure compensé d'une ou de plusieurs cellules inter-fréquences satisfait une condition de rapport d'événement de mesure, l'envoi du résultat de mesure compensé des une ou plusieurs cellules inter-fréquences au dispositif de réseau (S 303).

2. Procédé selon la revendication 1, dans lequel les informations de configuration de mesure comprennent : des informations de fréquence de l'au moins une cellule inter-fréquence, et des informations d'identification d'un modèle d'écart de mesure ; et
le modèle d'écart de mesure est utilisé pour indiquer la fréquence de mesure de l'au moins une cellule inter-fréquence par le dispositif terminal au cours de la période de mesure et la longueur de l'intervalle de mesure pour mesurer l'au moins une cellule inter-fréquence par le dispositif terminal.

3. Procédé selon la revendication 1 ou 2, le procédé comprenant en outre :
une première fois avant la mesure de l'au moins une cellule inter-fréquence à chaque fois, l'envoi de premières informations d'indication au dispositif de réseau, dans laquelle les premières informations d'indication servent à indiquer une capacité de réception de données par le dispositif terminal en utilisant l'antenne principale, et un intervalle entre la première fois et un temps de début de mesure correspondant est une deuxième durée prédéfinie.

4. Procédé selon la revendication 3, le procédé comprenant en outre :
chaque fois que le dispositif terminal mesure l'au moins une cellule inter-fréquence en utilisant l'antenne de diversité, la réception, en utilisant l'antenne principale, de données envoyées par le dispositif de réseau en utilisant un premier débit de transmission, dans lequel le premier débit de transmission est un débit de transmission déterminé par le dispositif de réseau en fonction des premières informations d'indication.

5. Procédé selon la revendication 4, le procédé comprenant en outre :
une deuxième fois avant de terminer la mesure de l'au moins une cellule inter-fréquence à chaque fois, l'envoi de secondes informations d'indication au dispositif de réseau, dans lequel les secondes informations d'indication servent à indiquer une capacité de réception de données par le dispositif terminal en utilisant les deux antennes, et un intervalle entre la deuxième fois et un temps de fin de mesure correspondant est une troisième durée prédéfinie.

6. Procédé selon l'une quelconque des revendications 1 à 5, le procédé comprenant en outre, après la mesure de l'au moins une cellule inter-fréquence en fonction des informations de configuration de mesure en utilisant l'antenne de diversité :
l'arrêt de la mesure de l'au moins une cellule inter-fréquence quand une qualité de signal de toutes les cellules inter-fréquences est inférieure à une qualité de signal de la cellule de desserte et le dispositif terminal est actuellement statique.

7. Dispositif terminal, dans lequel le dispositif terminal comprend deux antennes, l'une constituant une antenne principale et l'autre une antenne de diversité, et le dispositif terminal est configuré pour réaliser l'un quelconque des procédés selon les revendications 1 à 6.
